(19) Europäisches Patentamt
European Patent Office
Office européen des brevets

(11) **EP 2 191 162 B1**

(12) **EUROPÄISCHE PATENTSCHRIFT**

(45) Veröffentlichungstag und Bekanntmachung des Hinweises auf die Patenterteilung:
**31.03.2021  Patentblatt 2021/13**

(21) Anmeldenummer: **08787284.2**

(22) Anmeldetag: **18.08.2008**

(51) Int Cl.:
**F16F 1/18** *(2006.01)*      **F16F 1/02** *(2006.01)*

(86) Internationale Anmeldenummer:
**PCT/EP2008/060801**

(87) Internationale Veröffentlichungsnummer:
**WO 2009/033914 (19.03.2009 Gazette 2009/12)**

(54) **MIKROMECHANISCHE FEDER**

MICROMECHANICAL SPRING

RESSORT MICROMECANIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.09.2007   DE 102007042683**
**27.11.2007   DE 102007057044**

(43) Veröffentlichungstag der Anmeldung:
**02.06.2010   Patentblatt 2010/22**

(73) Patentinhaber: **Continental Teves AG & Co. OHG**
**60488 Frankfurt am Main (DE)**

(72) Erfinder: **GÜNTHNER, Stefan**
**60489 Frankfurt (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
| | |
|---|---|
| EP-A- 0 458 406 | EP-A2- 1 098 106 |
| WO-A-99/64763 | WO-A-2005/025381 |
| DE-A1- 19 920 066 | JP-A- 61 065 925 |
| US-A- 5 409 200 | US-B1- 6 457 804 |
| US-B1- 6 595 503 | US-B1- 7 086 300 |

**Beschreibung**

Die Erfindung betrifft eine mikromechanische Feder gemäß Oberbegriff von Anspruch 1 sowie die Verwendung der mikromechanischen Feder in mikromechanischen Systemen.

Es ist bekannt, mäanderförmige mikromechanische Federn zu verwenden, um ein einigermaßen lineares Auslenkverhalten, eines Oszillators, wie beispielsweise einer an Federn aufgehängten seismischen Masse, zu erreichen. Mäanderförmige Federn weisen allerdings jeweils relativ große Abmessungen bzw. eine relativ große Fläche in der Substrat-Ebene auf, weshalb mehr Substratfläche benötigt wird und die Federn eine relativ große Masse aufweisen, im Vergleich zu einfachen Balkenfedern. Mäanderförmige Federn haben zudem den Nachteil, dass die Linearität ihres Auslenkverhaltens im Wesentlichen von der Anzahl ihrer Windungen abhängt, wodurch mäanderförmige Federn mit besonders stark ausgeprägtem, linearem Auslenkverhalten oben beschriebene Nachteile in stärkerem Maße aufweisen.

In der DE 199 20 066 ist eine Feder gezeigt, bei der die Endabschnitte der Schenkel in Längsrichtung der Schenkel in der Ebene der Halbleiterschicht zunächst gekrümmt voneinander weg gerichtet sind und anschließend gekrümmt zueinander hin gerichtet sind und sich in einem zentralen gekrümmten Bereich miteinander vereinen.

In der US 7,086,300 B1 ist eine Feder mit im Wesentlichen U-förmigem Querschnitt gezeigt.

Die Aufgabe der vorliegenden Erfindung besteht darin, eine mikromechanische Feder vorzuschlagen, welche ein im Wesentlichen einstellbares, insbesondere lineares, Auslenkverhalten innerhalb eines definierten Auslenkintervalls aufweist und welche insbesondere relativ kleine Abmessungen aufweist. Die Aufgabe wird erfindungsgemäß gelöst durch die mikromechanische Feder gemäß Anspruch 1 sowie die Verwendung gemäß Anspruch 11.

Der Erfindung liegt der Gedanke zu Grunde, eine mikromechanische Feder, umfassend mindestens zwei Balkenabschnitte, welche im unausgelenkten Zustand der Feder im Wesentlichen parallel zueinander ausgerichtet sind oder eine Winkelweite von weniger als 45° zueinander aufweisen, und ein oder mehrere Verbindungsabschnitte, die die Balkenabschnitte mit einander verbinden, vorzuschlagen, wobei die Balkenabschnitte bezüglich ihrer Längsrichtung relativ zueinander verschiebbar bzw. relativ zueinander auslenkbar sind, und dass die Feder in Richtung ihrer Balkenabschnitte ein im Wesentlichen einstellbares Kraft-Auslenkverhalten aufweist. Die Feder weist einen negativen Nichtlinearitätskoeffizienten zweiter Ordnung der Federsteifigkeit bezüglich ihrer Auslenkung oder der Auslenkung zumindest eines ihrer Balkenabschnitte in Richtung der Balkenabschnitte auf. Dies entspricht insbesondere einer Aufweichung der Federsteifigkeit bei zunehmender Auslenkung, was zu Kompensationszwecken des Auslenkverhaltens herkömmlicher Federelemente vorteilhaft sein kann, welche eine anwachsende Verhärtung bei zunehmender Auslenkung aufweisen.

Die Erfindung betrifft insbesondere eine mikromechanische Feder, umfassend mindestens zwei Balkenabschnitte, welche im unausgelenkten Zustand der Feder im Wesentlichen parallel zueinander ausgerichtet sind oder eine Winkelweite von weniger als 45° zueinander aufweisen, und ein oder mehrere Verbindungsabschnitte, die die Balkenabschnitte mit einander verbinden, wobei die Balkenabschnitte bezüglich ihrer Längsrichtung relativ zueinander verschiebbar bzw. relativ zueinander auslenkbar sind, und dass die Feder ein Kraft-Auslenkverhalten mit negativem Nichtlinearitätskoeffizienten zweiter Ordnung der Federsteifigkeit, zumindest hinsichtlich einer Auslenkung ihrer Balkenabschnitte, aufweist, was insbesondere einer Aufweichung der Federsteifigkeit bei zunehmender Auslenkung entspricht. Dies ist insbesondere vorteilhaft zu Kompensationszwecken des Verhaltens herkömmlicher Federn, welche eine anwachsende Verhärtung bei zunehmender Auslenkung aufweisen.

Die erfindungsgemäße mikromechanische Feder hat gegenüber bisher bekannten mikromechanischen Federn den Vorteil, dass das Auslenkintervalls innerhalb dessen die Feder ein im Wesentlichen einstellbares, insbesondere lineares, Auslenkverhalten aufweist relativ groß ist und dass die Feder dabei relativ kleine Abmessungen aufweist.

Vorzugsweise weist die mikromechanische Feder zumindest zwei Balkenabschnitte auf, welche im Wesentlichen direkt gegenüberliegend angeordnet sind und mittels eines Verbindungsabschnitts miteinander verbunden sind.

Ein Balkenabschnitt unterscheidet sich von einem Verbindungsabschnitt insbesondere zumindest dadurch, dass der Balkenabschnitt deutlich länger, besonders bevorzugt wenigstens doppelt so lang ist, wie der mindestens eine angrenzende Verbindungsabschnitt, wobei diese beiden Abschnitte insbesondere in Form wenigstens einer Rundung in einander übergehen können.

Die Balkenabschnitte mäanderförmiger Federn werden im Zuge einer Auslenkung im Wesentlichen nicht bezüglich ihrer Längsrichtung zueinander verschoben.

Mit dem Begriff Auslenkung ist zweckmäßigerweise der Auslenkungsweg bzw. die Auslenkungsstrecke gemeint.

Unter einer Feder wird bevorzugt ein Federsystem und/oder ein Oszillator verstanden, welcher ein oder mehrere Federsegmente bzw. -elemente sowie insbesondere zusätzlich ein oder mehrere seismische Massen umfasst. Dabei ist diese Feder bzw. dieser mikromechanische Oszillator besonders bevorzugt zumindest in Richtung im Wesentlichen seiner mindestens zwei Balkenabschnitte auslenkbar und weist in diese Richtung ein im Wesentlichen einstellbares, insbesondere lineares, Auslenkverhalten auf.

Unter einem im Wesentlichen linearen Auslenkverhalten einer Feder wird vorzugsweise ein im Wesentlichen linearer Zusammenhang zwischen Auslenkungsweg und Rückstellkraft, insbesondere eine im Wesentlichen konstante Federsteifigkeit, verstanden.

Unter dem Nichtlinearitätskoeffizienten 2. Ordnung der Federsteifigkeit, auch einfach Nichtlinearitätskoeffizient genannt, wird bevorzugt der Parameter bzw. Faktor ß [$1/m^2$] in folgender Gleichung der normierten Federsteifigkeit in Abhängigkeit der Auslenkung $x_0$ verstanden:

$$\hat{k}(x_0) = (1 + \alpha x_0 + \beta x_0{}^2),$$

wobei folgende Zusammenhänge gelten:

$$k(x_0) = k_0(1 + \alpha x_0 + \beta x_0{}^2), \quad \hat{k}(x_0) = k(x_0)/k_0.$$

Die Federsteifigkeit ist dabei zweckmäßigerweise gleich dem Quotient aus der Rückstellkraft bzw. der Auslenkungskraft geteilt durch den Auslenkungsweg.

Unter einer im Wesentlichen linearen Feder und/oder einer Linearfeder wird vorzugsweise eine erfindungsgemäße mikromechanische Federn und/oder eine mögliche, weiterführende Ausführungsform verstanden.

Die Balkenabschnitte und Verbindungsabschnitte sind bevorzugt jeweils starr miteinander verbunden.

Die Feder koppelt vorzugsweise zwei mikromechanische Elemente miteinander oder ist zumindest an ein Substrat gekoppelt, wobei die Feder zur Kopplung jeweils einen Kopplungsbereich und/oder ein Kopplungselement aufweist, welches insbesondere mindestens ein zusätzliches mikromechanisches Federelement umfasst, wobei das zumindest eine zusätzliche Federelement mit dem Rest der Feder im Wesentlichen steif gekoppelt ist. Hierdurch können insbesondere die Eigenschaften eines nichtlinearen mikromechanischen Federelements kompensiert werden. Besonders bevorzugt weist die Feder ein oder mehrere mikromechanische Federelemente auf, mit welchen sie über eine seismische Masse gekoppelt ist. Dabei weist die gesamte Feder ein im Wesentlichen einstellbares, insbesondere lineares, Auslenkverhalten in Richtung der Balkenabschnitte auf. Durch solch eine Ausbildung der Feder können die Auslenkungs- bzw. Schwingungseigenschaften einer Feder, umfassend eine seismische Masse, wenigstens eine, insbesondere drei, einfache Federelemente, insbesondere Balkenfederelemente, durch eine zweckmäßige Ausbildung der Balkenabschnitte und des zumindest einen Verbindungsabschnitts eingestellt werden. Dabei werden vorzugsweise im Wesentlichen lineare Auslenkungs- bzw. Schwingungseigenschaften der Feder im Wesentlichen in Richtung ihrer Balkenabschnitte eingestellt. Diese Ausführung ist besonders geeignet, um einen an einfachen Federelementen aufgehängten, mit im Wesentlichen nicht eingestellten und insbesondere nicht linearen Eigenschaften, Oszillator durch Kopplung bzw. zusätzliche Aufhängung mittels der Balken- und der wenigstens einen Verbindungsabschnitts zu einer Gesamtfeder auszubilden, deren Auslenkungs- bzw. Schwingungseigenschaften im Wesentlichen einstellbar, insbesondere linear, sind.

Alternativ vorzugsweise sind zwei oder mehr mikromechanische Federn mittels einer seismischen Masse, insbesondere starr, miteinander gekoppelt.

Die Fertigungsparameter der Feder, umfassend bevorzugt zumindest die räumlichen Abmessungen und/oder die Materialparameter der Balkenabschnitte und des wenigstens einen Verbindungsabschnitts und insbesondere der Kopplungsbereiche und/oder der Kopplungselemente, weisen, insbesondere jeweils, solche Werte auf bzw. sind so ausgelegt, dass die Feder in Richtung ihrer Balkenabschnitte ein im Wesentlichen einstellbares bzw. lineares Auslenkverhalten, zumindest innerhalb eines definierten Auslenkintervalls, aufweist.

Es ist zweckmäßig, dass die Balkenabschnitte und das/die Verbindungsabschnitt/e der Feder im unausgelenkten Zustand im Wesentlichen u-förmig, v-förmig oder s-förmig ausgebildet und angeordnet sind.

Das im Wesentlichen einstellbare bzw. lineare Auslenkverhalten der Feder ist bevorzugt zumindest durch die Ausbildung der Balkenabschnitte mit definierten Längen und Breiten sowie durch die Anordnung der wenigstens zwei Balkenabschnitte mit einem definierten Abstand zueinander bestimmt.

Es ist bevorzugt, dass die Feder im Wesentlichen aus einkristallinem Silizium besteht bzw. gefertigt ist.

Die Kristallstruktur des Materials der mikromechanischen Feder ist vorzugsweise so ausgerichtet, dass die Normale der Kristallgitterebene um im Wesentlichen 45° zur Normalen des Substrats, aus welchem die Feder gefertigt ist, ausgerichtet ist. Dies entspricht insbesondere Miller-Indizes von <1,1,0>.

Der Betrag des Nichtlinearitätskoeffizienten zweiter Ordnung der Federsteifigkeit der Feder ist vorzugsweise bezüglich einer Auslenkung im Wesentlichen in Richtung ihrer Balkenabschnitte geringer als 2000000 $1/m^2$, insbesondere geringer als 300000 $1/m^2$.

Die Feder weist bevorzugt wenigstens ein Kopplungselement umfassend zumindest ein zusätzliches Federelement auf, dessen Federsteifigkeit sich innerhalb eines definierten Auslenkungsintervalls ändert, wobei die gesamte Feder so ausgebildet ist, dass diese sich ändernde Federsteifigkeit des zumindest einen zusätzlichen Federelements insgesamt kompensiert wird und die Federsteifigkeit der gesamten Feder hinsichtlich einer Auslenkung im Wesentlichen in Richtung ihrer Balkenabschnitte innerhalb des definierten Auslenkungsintervalls im Wesentlichen konstant ist. Hierdurch ist es besonders bevorzugt möglich, das auslenkungsabhängig steifigkeitserhöhende Verhalten eines zusätzlichen Federelements zu kompensieren, in dem das Federsegment bestehend aus den mindestens zwei, im Wesentlichen parallelen bzw. eine Winkelweite von unter 45° aufweisenden, Balkenabschnitten und den diese verbindenden Verbindungsabschnitte mit einem bezüglich der Auslenkung steifigkeitsabschwächenden Verhalten ausgelegt ist und die gesamte Feder somit ein im Wesentlichen lineares Auslenkverhalten innerhalb eines relativ großen definierten Auslenkungsintervalls aufweist.

Zusätzlich betrifft die Erfindung ein Verfahren zur Herstellung der mikromechanischen Feder aus einem Halbleiter, insbesondere aus einkristallinem Silizium.

Die Erfindung betrifft außerdem die Verwendung der mikromechanischen Feder in einem mikromechanischen System, insbesondere in mikromechanischen Sensoren.

Die erfindungsgemäße mikromechanische Feder ist zur Verwendung in mikromechanischen Systemen, bevorzugt in mikromechanischen Sensoren vorgesehen. Besonders bevorzugt ist die mikromechanische Feder zur Verwendung in Beschleunigungssensoren vorgesehen, weil dort ein linearer Zusammenhang zwischen auf eine an Federn aufgehängte Masse einwirkende Beschleunigung und der auszuwertenden Auslenkung der Masse wünschenswert ist, wozu Federn mit möglichst linearem Auslenkverhalten sinnvoll sind. Alternativ vorzugsweise wird die Verwendung der erfindungsgemäßen Feder in optischen Schaltern, insbesondere zur Ermöglichung linearer Verfahrwege von Spiegel-Aktuatoren, vorgeschlagen. Zudem ist es besonders bevorzugt, die erfindungsgemäße Feder in mikromechanischen Resonatoren, insbesondere in Vibrationssensoren, zu verwenden. Außerdem ist die Verwendung der erfindungsgemäßen Feder in mikromechanischen Drehratensensoren bevorzugt, insbesondere zur Aufhängung der seismischen Massen und besonders bevorzugt um lineare Auslenkungen hinsichtlich der Primär- bzw. Antriebsmode zu ermöglichen. Hierdurch, ganz besonders durch die symmetrische Aufhängung der seismischen Masse an zumindest vier erfindungsgemäßen Federn kann eine als Quadratur bezeichnete Störung vermieden werden, welche einem Störsignal der Auslesemode entspricht, das üblicherweise durch Fertigungsungenauigkeiten der Federn entsteht. Zusätzlich können relativ große, lineare Auslenkungen in der Antriebsmode durch den Einsatz der erfindungsgemäßen Feder in einem Drehratensensor realisiert werden.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung

Fig. 1    ein Ausführungsbeispiel eines einfachen Drehratensensors mit Balkenfedern,

Fig. 2    einen beispielhaften, einfachen Drehratensensor mit mäanderförmigen Federn,

Fig. 3    den beispielgemäßen Verlauf der normierten Federsteifigkeit $\hat{k}(x_0) = \dfrac{k(x_0)}{k_0}$ einer Balkenfeder und einer mäanderförmigen Feder in Abhängigkeit der Auslenkung,

Fig. 4    beispielhafte Amplitudengänge $x_0(f_{ext})$ der Auslenkung unterschiedlicher nichtlinearer Oszillatoren,

Fig. 5    eine beispielhaft ausgebildete Feder mit im Wesentlichen linearem Auslenkverhalten,

Fig. 6    unterschiedliche, Verlaufsbeispiele der normierten Federsteifigkeit in Abhängigkeit der Auslenkung für unterschiedliche Ausführungsformen der im Wesentlichen linearen Feder

Fig. 7    die Abhängigkeit des Nichtlinearitätskoeffizienten zweiter Ordnung ß der Federkonstante eines Feder-Ausführungsbeispiels von seinen Abmessungen d und 1,

Fig. 8    einige verschiedene Ausführungsbeispiele von im Wesentlichen linearen mikromechanischen Federn,

Fig. 9    Ausführungsbeispiele aus kombinierten, miteinander verbundenen Linearfedern, sowie Ausführungsbeispiele für Kombinationen von Linearfedern mit zusätzlichen Kopplungselementen bzw. einem zusätzlichen Federelement,

Fig. 10   ein Ausführungsbeispiel zur Realisierung eines rotatorischen Schwingungssystems mit vier Linearfedern,

Fig. 11   eine mikromechanische Feder, welche 3 zusätzliche Federelemente umfasst, welche eine über eine seismische Masse gekoppelt sind,

Fig. 12    eine beispielhafte mäanderförmige Feder zum direkten Vergleich mit einer in

Fig. 13    gezeigten beispielhaften Linearfeder, und

Fig. 14    die vergleichenden Verläufe der normierten Federsteifigkeiten in Abhängigkeit der Auslenkung dieser beiden Ausführungsbeispiele.

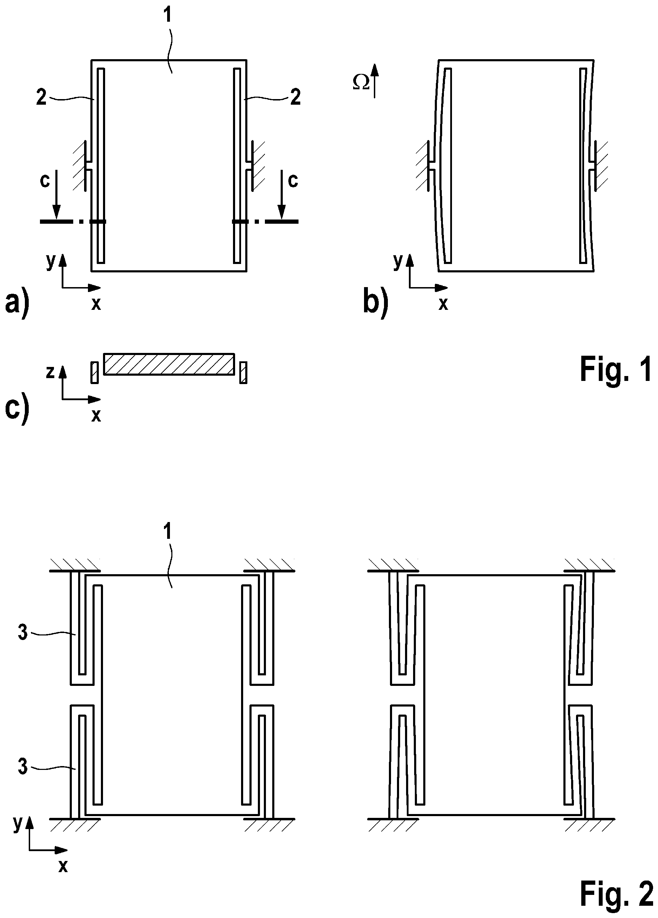

In Fig. 1 ist ein einfacher Drehratensensor beispielhaft veranschaulicht mit einer seismischen Masse 1, welche an zwei Balkenfedern 2an einem nicht dargestellten Substrat aufgehängt ist. In Fig. 1 b) wird die Antriebsmode des Drehratensensors veranschaulicht, welche Auslenkungen seismischer Masse 1 und der Balkenfedern 2 umfasst. Fig. 1 c) zeigt einen Schnitt durch Fig. 1 a) in der x-z-Ebene, wobei seismische Masse 1 in z-Richtung ausgelenkt ist und beispielhaft in seiner Auslesemode schwingt. Es ist bekannt, dass die dargestellte, sehr einfache Federgeometrie eine starke nichtlineare Beziehung zwischen der Auslenkung seismischer Masse 1 und der auf sie wirkenden Rückstellkraft aufweist. Mit zunehmender Auslenkung treten zusätzliche mechanische Spannungen auf, die aufgrund der Einspannbedingungen in longitudinaler Balkenrichtung wirken und zu einer Verhärtung der Balkenfeder führen.

Fig. 2 zeigt beispielhafte, Federn mit Mäanderstruktur 3 an denen seismische Masse 1 eines beispielgemäßen, einfachen Drehratensensors aufgehängt ist. Die Verwendung solcher mäanderförmiger Federn 3 reduziert die Abhängigkeit normierten Federsteifigkeit $\hat{k}(x_0)$ von der Auslenkung der Federn.

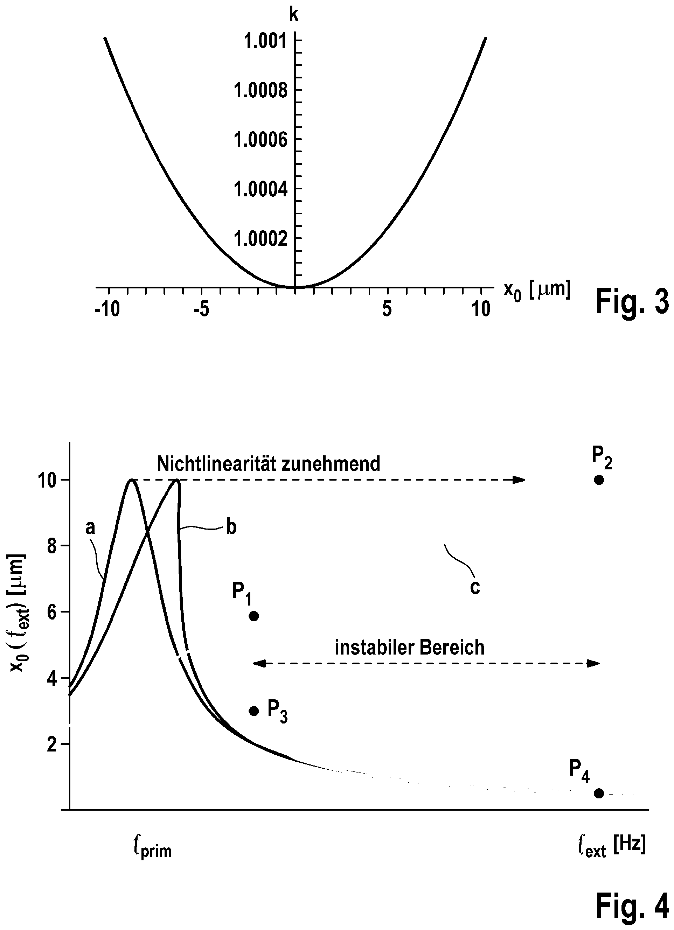

Die schwarze Kurve in Fig. 3 zeigt das typische, beispielgemäße Verhalten einer einfachen Balkenfeder bezüglich ihrer normierten Federsteifigkeit $\hat{k}(x_0) = {k(x_0)}/{k_0}$ in Abhängigkeit einer Auslenkung in x-Richtung, die auf den Grenzwert der Federsteifigkeit $k_0$ für kleine Auslenkungen bezogen ist. Die graue kurve zeigt einen beispielhaften, typischen Verlauf der normierten Federsteifigkeit eines Oszillators mit mäanderförmigen Balkenfedern in Abhängigkeit der Auslenkung, der dieselbe Primärfrequenz aufweist wie der Oszillator mit den ursprünglichen Balkengeometrien, welcher in Fig. 1 abgebildet ist.

Das Problem derartig nichtlinearer Primäroszillatoren besteht darin, dass sie nur bis zu einer bestimmten Maximalamplitude ausgelenkt werden können, bevor Instabilitäten entstehen. Fig. 4 zeigt beispielhafte Amplitudengänge $x_0 (f_{ext})$ unterschiedlicher nichtlinearer Oszillatoren. Während die schwarze Kurve a das wohlbekannte Verhalten eines linearen, harmonisch angeregten und gedämpften harmonischen Oszillators mit der Eigenfrequenz $f_{prim}$ zeigt, weicht mit zunehmender Nichtlinearität die Kurve b von der idealen ab (dunkelgraue Kurve), bis Bereiche entstehen (hellgraue) Kurve c, in denen es bi-stabile Zustände gibt, so dass für bestimmte Anregefrequenzen $f_{ext}$ mehrere stabile Schwingungszustände existieren, zwischen denen das System durch minimale äußere Störungen springen kann. Derartige nichtlineare Oszillatoren weisen typisches Hystereseverhalten auf: von niedrigen Anregefrequenzen ($f_{ext} < f_{prim}$) kommend passiert das System P1, P2 und P4, während das System von hohen Anregefrequenzen ($f_{ext} > f_{prim}$) kommend die Punkte P4, P3 und P1 durchläuft. Um daher stabil arbeitende Drehratensensoren zu entwerfen, die eine hohe Amplitude und somit eine hohe Drehratenverstärkung aufweisen, müssen die Federelemente, die die Primärschwingung definieren möglichst linear sein.

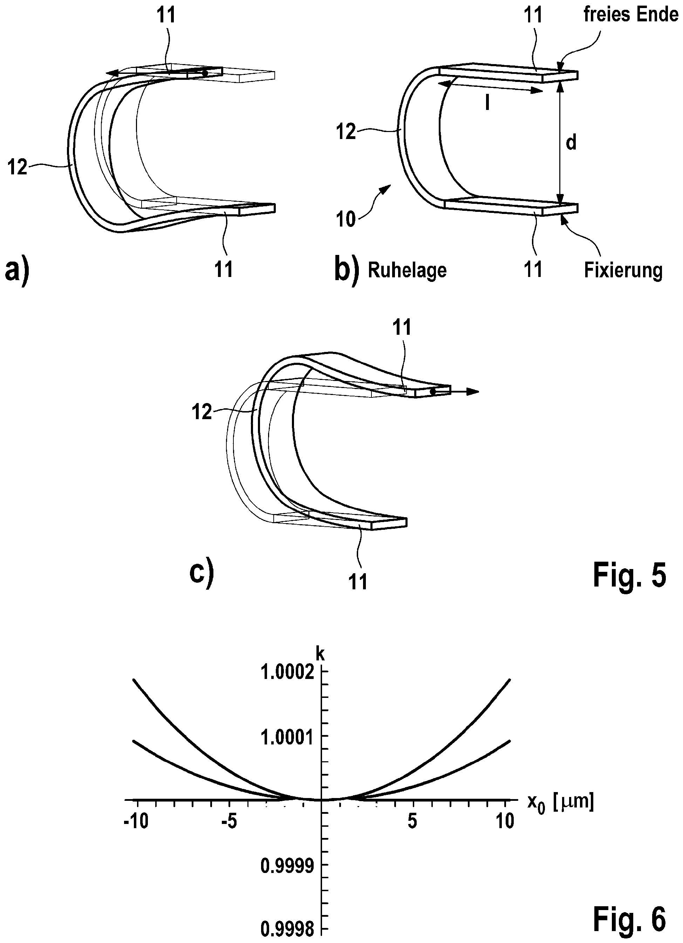

Fig. 5 veranschaulicht ein beispielhaftes Federelement, das den Vorteil besitzt, insensitiv gegenüber bestimmten Prozessschwankungen zu sein, welche insbesondere ungewollte, nicht dargestellte, Auslenkungen in zur eigentlichen, gewünschten Auslenkung senkrechter Richtung verursachen. Es hat sich gezeigt, dass Federelement 10, wenn es geeignet dimensioniert ist, die Eigenschaft besitzt, beliebig linear zu sein. Federelement 10 umfasst beispielgemäß zwei zueinander im Wesentlichen parallele Balkenabschnitte 11 im unausgelenkten Zustand, wie in Fig. 5 b) dargestellt, welche durch ein Verbindungsabschnitt 12 verbunden sind. Im Zuge einer Auslenkung, wie in den Fig. 5 a) und c) veranschaulicht werden Balkenabschnitte 11 gegeneinander verschoben.

Ein weiterer möglicher Vorteil ist, dass diese Struktur so gestaltet werden kann, dass mit zunehmender Auslenkung eine Aufweichung der Federsteifigkeit erreicht wird, statt eine Verhärtung der Federsteifigkeit zu erfahren, wie es von herkömmlichen Federn bekannt ist.

Berechnungen und Messungen haben gezeigt, dass durch Abstimmung der Geometrie dieses beispielhaften Federelementes 10 ein beliebiges, insbesondere lineares, Auslenkverhalten und auch steifigkeitsreduzierendes Verhalten erzeugt werden kann.

Fig. 6 zeigt für unterschiedliche Ausführungsbeispiele des Federelementes 10 typische Verläufe der normierten Federkonstanten $\hat{k}(x_0)$ in Abhängigkeit der Auslenkung. Nähert man die normierte Federsteifigkeit $\hat{k}(x_0)$ mit der Formel

$$\hat{k}(x_0) = 1 + \beta\, x_0^2 \,,$$

so kann man $\beta$ als Stärke der Nichtlinearität auffassen. Je größer der Betrag von ist, desto mehr weicht die Federsteifigkeit für große Auslenkungen vom linearen Verhalten ab. Das Vorzeichen von $\beta$ gibt schließlich an, ob sich die Federsteifigkeit mit zunehmenden Auslenkungen verstärkt (+) oder abschwächt (-).

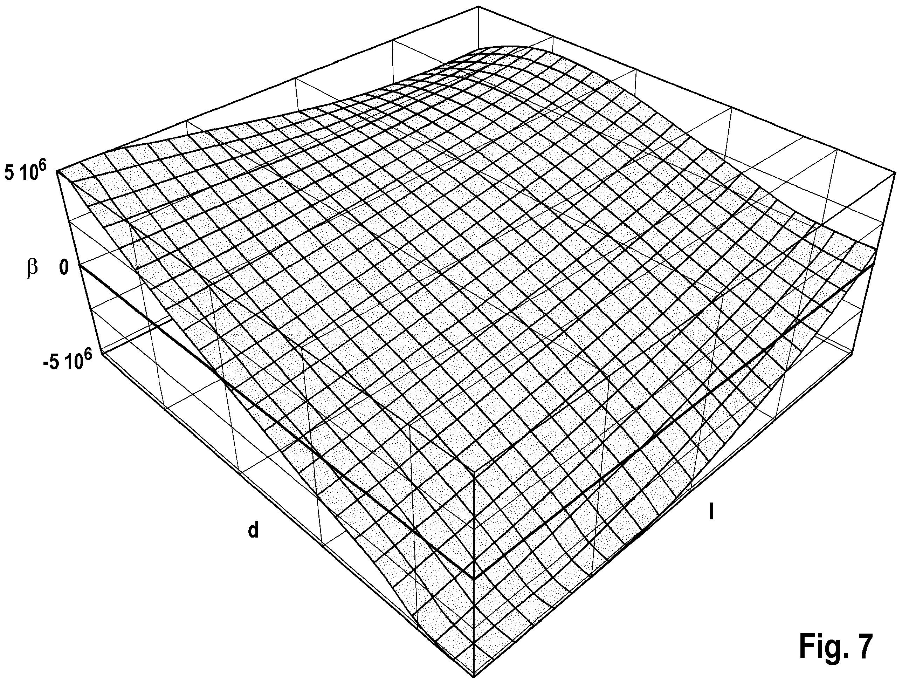

Fig. 7 veranschaulicht für eine bestimmte Federgeometrie beispielhaft den Zusammenhang zwischen den Dimensionen $d$ und 1, entsprechend des Ausführungsbeispiels aus Fig. 5, und dem Nichtlinearitätskoeffizienten $\beta$. Dabei wurde darauf geachtet, dass für alle Kombinationen $d$ und $l$ die Federsteifigkeit $k_0$ identisch ist. Dies ermöglicht also für eine gewünschte Federsteifigkeit in gewissen Rahmenbedingungen die Nichtlinearität positiv, negativ oder möglichst klein einzustellen.

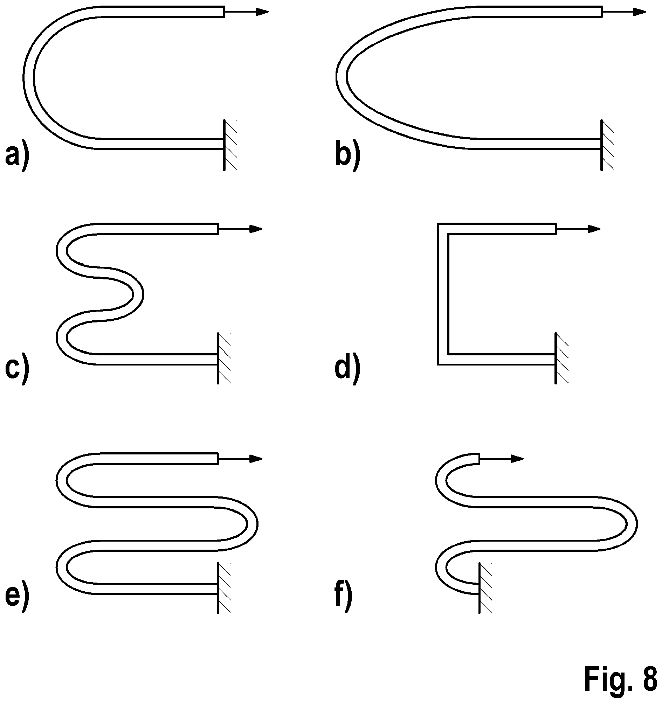

Fig. 8 zeigt einige Ausführungsbeispiele von im Wesentlichen linearen Federn, welche sich hinsichtlich der Anzahl und Ausbildung der Balkenabschnitte, der Verbindungsabschnitte sowie der Kopplungsbereiche bzw. Kopplungselemente von einander unterscheiden.

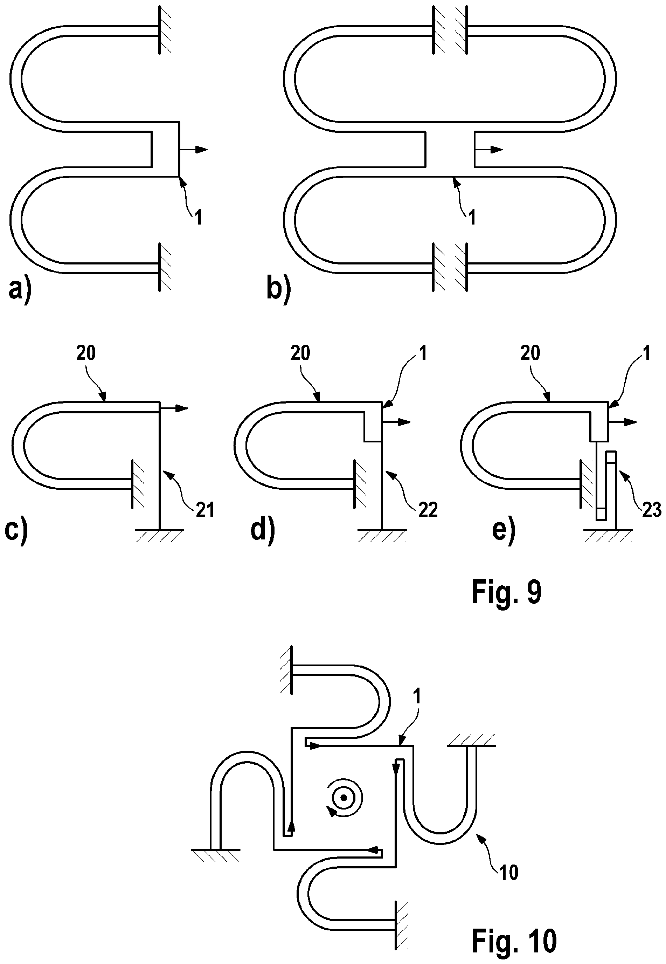

In Fig. 9 a) und b) sind Ausführungsbeispiele dargestellt, bei denen mehrere im Wesentlichen lineare Federn fest und starr miteinander verbunden sind, beispielgemäß mittels seismischer Masse 1, und entsprechend kombiniert eingesetzt werden können. Fig. 9 c) bis e) zeigen Ausführungsbeispiele mit Kopplungselementen. Dabei sind Kombinationen einzelner Linearfedern mit konventionellen Balkenfedern 21, 22 in Fig. 9 c) und d), deren freie Enden starr miteinander verbunden sind sowie mit einer zusätzlichen anders orientierten nicht linearen Feder 23 in Fig. 9 e), dargestellt.

Dabei ist umfasst die starre Verbindung in Fig. 9 d) und e) jeweils eine seismische Masse 1. Beispielgemäß ist die Steifigkeit entlang der Auslenkrichtung in erster Linie durch die im Wesentlichen linearen Federn 20 gegeben.

Fig. 10 veranschaulicht beispielhaft eine seismische Masse 1, welche an vier Linearfedern 10 aufgehängt ist und beispielgemäß somit im Wesentlichen linear, rotatorisch auslenkbar ist.

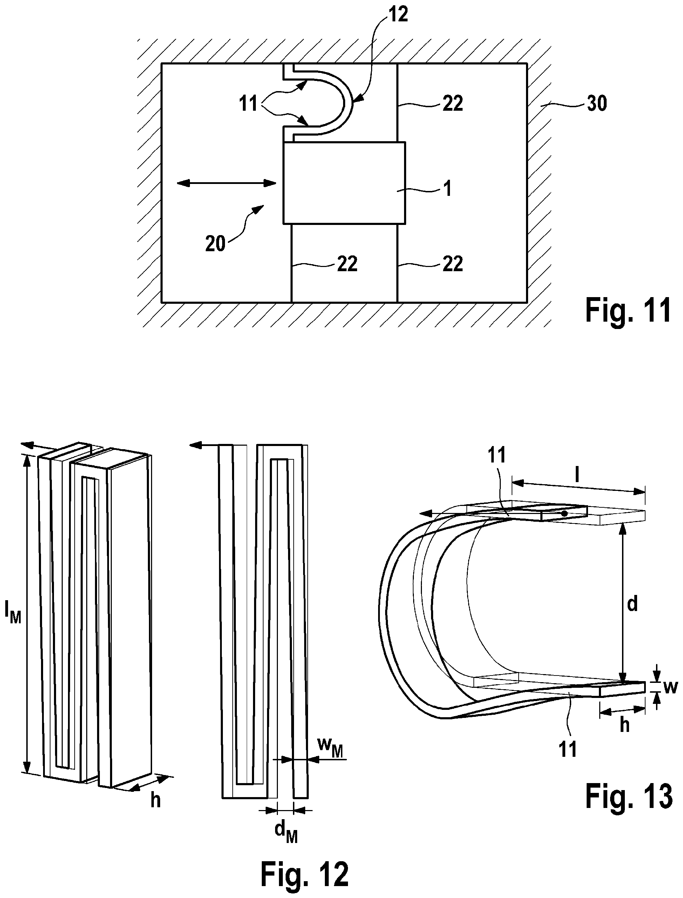

In Fig. 11 ist ein Ausführungsbeispiel einer mikromechanischen Feder, als Linearfeder 20, abgebildet, welche gleichzeitig ein Oszillator ist und seismische Masse 1 sowie Balkenfederelemente 22 umfasst und an Substrat 30 aufgehängt ist. Die linearen Eigenschaften von Linearfeder 20 beruhen im Wesentlichen auf der beispielgemäßen Ausbildung der Balkenabschnitte 11 und des Verbindungsabschnitts 12 mit denen die nichtlinearen Auslenkungseigenschaften der Balkenfederelemente 22 in Richtung der Balkenabschnitte kompensiert werden.

Im Folgenden sind beispielhafte Verfahren zur Realisierung bzw. Entwicklung von obig gezeigten Linearfedern bzw. zur Entwicklung von mikromechanischen Federn mit einstellbarem Auslenkverhalten beschrieben:

Verfahren mittels finiter Elemente:

Das Verfahren der finiten Elemente eröffnet die Möglichkeit, Federeigenschaften einer Balkenanordnung aus einem bestimmten Material, dessen elastische Eigenschaften bekannt sind, rechnergestützt zu beschreiben. Es können beispielsweise die Federsteifigkeiten in alle Raumrichtungen, bzw. um alle Raumachsen beschrieben werden. Dazu wird die Stelle der Feder, die einem als fixiert bzw. eingespannt angenommenen Ende der Feder entspricht, mit einer entsprechenden Randbedingung versehen und die Stelle, die einem als frei bzw. auslenkbar angenommenen Ende entspricht, exemplarisch um einen bestimmten Betrag in eine Raumrichtung, bzw. um eine Raumachse ausgelenkt. Aus dem Ergebnis der Analyse, beispielgemäß durch Bestimmung der Reaktionskraft auf den Auslenkungsweg, kann die Steifigkeit der Feder berechnet werden. Zur Bestimmung der Federsteifigkeit lassen sich auch andere bekannte Verfahren heranziehen, wie beispielsweise die Wirkung einer Kraft auf das freie Ende oder einer Beschleunigung auf eine angehängte Masse. Ferner können in der Finite-Elemente-Analyse beispielsweise nichtlineare Materialeigenschaften, sowie geometrische Nichtlinearitäten vollständig abgebildet werden. Damit kann bei gegebenen Dimensionen einer Materialanordnung die auslenkungsabhängige Federsteifigkeit und somit das Linearitätsverhalten bestimmt werden. Im Folgenden wird ein Verfahren beschrieben, mit dem das gewünschte Auslenkungsverhalten erzielt bzw. eingestellt werden kann.

Zunächst wählt man eine oder mehrere bestimmte Ausbildungsformen einer Feder aus und führt für jede einzelne die folgenden Untersuchungen durch. Nach der Analyse der Einzeluntersuchungen kann man sich für die optimale Federausbildung entscheiden.

Für eine Federausbildung wählt man danach die Dimensionen aus, die variiert werden können. Hat man n freie Geometrieparameter $\xi_i$ ($i = 1...n$), die durch den Vektor $\overline{\xi}=(\xi_1,\xi_2,...\xi_n)$ repräsentiert werden, zur Verfügung, so wird dadurch ein $n$-dimensionales Parameterfeld aufgespannt. Typischerweise gelten für die Parameter $\xi_i$ bestimmte Einschränkungen bezüglich der Werte, die sie annehmen können. Sie können etwa innerhalb eines Intervalls mit den Grenzwerten $a_{\xi_i}$ und $b_{\xi_i}$ liegen: $\xi_i \in \llcorner a_{\xi_i};b_{\xi_i}\lrcorner$.

Schließlich wählt man für jeden Geometrieparameter $\xi_i$ eine Anzahl von $m_i$ Werten aus, die innerhalb des Bereichs $\llcorner a_{\xi_i};b_{\xi_i}\lrcorner$ liegen: $\xi_{i,1},\xi_{i,2},...\xi_{i,m_i}$. Daraus ergibt sich ein Satz von $\prod_{i=1}^{n} m_i$ unterschiedlicher Parametervektoren $\xi_{1,j_1},\xi_{2,j_2},...\xi_{n,jn}$ mit $j_i \in [1,2,...m_i]$. Für jede mögliche Kombinationen von $(j_1,j_2,... j_n)$ gibt es einen zugehörigen Parametersatz $(\xi_{1,j_1},\xi_{2,j_2},...\xi_{n,jn})$, dem eine bestimmte Geometriedimensionierung entspricht. Für jede einzelne Geometriedimensionierung können nun die gewünschten Simulationen durchgeführt werden. Zur Bestimmung des Auslenkungsverhaltens sind hierzu beispielsweise mindestens drei Simulationen notwendig, bei denen das freie Ende um mindestens drei verschiedene Werte $x_1$, $x_2$, ... $x_p$ ($p{\geq}3$) in die gewünschte Auslenkrichtung verschoben wird. Das Ergebnis sind mindestens drei Reaktionskräfte auf das ausgelenkte freie Ende entgegen der Auslenkrichtung: $F(x_1)$, $F(x_2)$, ...$F(x_p)$.

Hieraus lassen sich die Federsteifigkeiten $K(x_q)=F(x_q)/x_q$ mit $q \in [1,2,..p]$ berechnen. Man kann dann die Parameter $k_0$, $\alpha$ und $\beta$ der Funktion

$$k(x_0) = k_0\left(1 + \alpha\, x_0 + \beta\, x_0^2\right)$$

so bestimmen, dass die Federkonstanten $K(x_q)$ durch $K(x_q)$ z. B. nach dem Prinzip der kleinsten quadratischen Abweichung approximiert werden. Für jeden Parametersatz $(\xi_{1,j_1},\xi_{2,j_2},...\xi_{n,j_n})$ erhält man so die lineare Federkonstante $k_0$ und den Nichtlinearitätskoeffizienten $\beta$.

Hat man nun für alle Parametersätze aller Federausbildungen den Nichtlinearitätskoeffizienten $\beta$ bestimmt, lassen sich die Parametersätze und/oder Federausbildungen auswählen, die die gewünschten Eigenschaften bezüglich der Steifigkeit und des Nichtlinearitätskoeffizienten $\beta$ etc. aufweisen.

Verfahren der analytischen Modellierung:

Beschränkt man sich auf einfache Balkengeometrien, so kann ein analytisches Modell gemäß der Balkentheorie entworfen werden, das die gewünschten Eigenschaften beschreibt. Die Einstellung des Nichtlinearitätskoeffizienten kann durch eine Parameteroptimierung der geometrischen Dimensionen innerhalb des analytischen Modells erfolgen.

Experimentelle Auswahl:

Als weitere Möglichkeit bietet sich die experimentelle Untersuchung von Variationen von ausgewählten Federkonzepten an. Beispielsweise können Oszillatoren mit an den zu untersuchenden Federelementen aufgehängten Massen untersucht werden. Daraus können Rückschlüsse auf den Nichtlinearitätskoeffizienten gezogen werden. Aufgrund des Produktions- und Messaufwandes können so allerdings nur relativ wenige Dimensionierungen analysiert werden.

Im Folgenden wird eine beispielhafte mikromechanische Linearfeder genauer beschrieben und einer herkömmlichen, mikromechanischen, linearitätsoptimierten, mäanderförmigen Feder gegenübergestellt. Als Randbedingungen sind gegeben:

- Die Strukturhöhe h ist 100 $\mu$m.
- Das verwendete Material ist einkristallines Silizium, wobei das Koordinatensystem, das durch die Kristallrichtungen gegeben ist, um 45 Grad um die Wafernormale gegen das Koordinatensystem des Elementes gedreht ist.
- Die Federsteifigkeit in Auslenkrichtung soll 400 Nm$^{-1}$ betragen. Wird eine Masse von zwei $\mu$g durch 2 Federn gehalten, so stellt sich eine Eigenfrequenz in Auslenkrichtung bei 20 kHz ein.

Eine herkömmliche mäanderförmige Feder mit den Dimensionen $l_M$ = 436 $\mu$m, $w_M$ = 18 $\mu$m und $d_M$ = 20 $\mu$m besitzt die Steifigkeit 400 Nm$^{-1}$. Die durch die Mäanderstruktur belegte Siliziumfläche beträgt dabei 0.024 mm$^2$. Fig. 12 zeigt diese beispielhafte mäanderförmige Feder.

Fig. 13 zeigt zum Vergleich eine beispielhafte im Wesentlichen linearer Feder mit den Dimensionen $l$ = 250 $\mu$m, was im Wesentlichen der Länge der beiden Balkenabschnitte 11 entspricht, der Breite w = 15.3 $\mu$m und dem Abstand der beiden Balkenabschnitte $d$ = 250 $\mu$m, wobei diese Feder ebenfalls eine Steifigkeit von 400 Nm$^{-1}$ aufweist. Durch das obig beschriebene Verfahren der finiten Elemente wurden die Abmessungen so gewählt, dass der Nichtlinearitätskoeffizient $\beta$ möglichst klein ausfällt. Die durch die Federstruktur belegte Siliziumfläche beträgt dabei lediglich 0.014 mm$^2$.

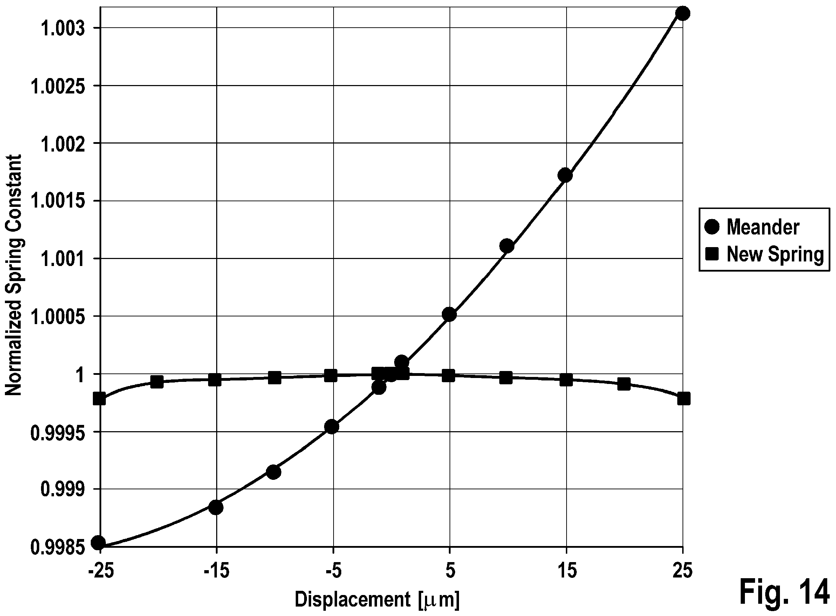

Das unterschiedliche Linearitätsverhalten dieser beiden verschiedenen Federn aus Fig. 12 und 13 ist in Fig. 14 dargestellt. Dabei wurde wieder die normierte Federkonstante $\hat{k}(x_0)$ in Auslenkrichtung gegen die Auslenkung aufgetragen. Während die mäanderförmige Feder im dargestellten Auslenkungsbereich einen Nichtlinearitätskoeffizienten von $1.3\ 10^6$ aufweist, ist der Nichtlinearitätskoeffizient der neuen Federstruktur betragsmäßig kleiner als 300 000. Insbesondere ist bei der dargestellten neuen Federstruktur der Nichtlinearitätskoeffizient negativ, so dass durch zusätzliche Effekte auftretende federversteifende Nichtlinearitäten ausgeglichen werden könnten. Ein Oszillator mit der mäanderförmigen Struktur kann ohne Instabilitätsbereiche nur bis etwa 9 $\mu$m Amplitude betrieben werden, mit der neuartigen Federstruktur sind stabile Oszillationen bis zu Amplituden von 23 $\mu$m möglich. Ferner ist die, durch die im Vergleich zur beispielgemäßen Linearfeder benötigte, Fläche bei der Mäanderstruktur beträchtlich größer.

**Patentansprüche**

1. Mikromechanische Feder (10, 20), umfassend mindestens zwei Balkenabschnitte (11), welche im unausgelenkten Zustand der Feder im Wesentlichen parallel zueinander ausgerichtet sind oder eine Winkelweite von weniger als 45° zueinander aufweisen, und ein oder mehrere Verbindungsabschnitte (12), die die Balkenabschnitte (11) mit einander verbinden, wobei die Balkenabschnitte (11) bezüglich ihrer Längsrichtung relativ zueinander verschiebbar sind, und dass die Feder (10, 20) in Richtung ihrer Balkenabschnitte (11) ein im Wesentlichen einstellbares Kraft-Auslenkverhalten aufweist **dadurch gekennzeichnet, dass** diese einen negativen Nichtlinearitätskoeffizienten zweiter Ordnung der Federsteifigkeit bezüglich ihrer Auslenkung oder der Auslenkung zumindest eines ihrer Balkenabschnitte (11) in Richtung der Balkenabschnitte (11) aufweist.

2. Feder nach Anspruch 1, **dadurch gekennzeichnet, dass** die Feder (10, 20) zumindest zwei mikromechanische Elemente miteinander koppelt oder zumindest an ein Substrat (30) gekoppelt ist und zur Kopplung jeweils einen Kopplungsbereich und/oder wenigstens ein Kopplungselement (1, 21, 22, 23) aufweist, welches insbesondere mindestens ein zusätzliches mikromechanisches Federelement (21, 22, 23) umfasst, wobei das zusätzliche Federelement (21, 22, 23) mit dem Rest der Feder im Wesentlichen steif gekoppelt ist.

3. Feder nach Anspruch 2, **dadurch gekennzeichnet, dass** die Feder (10, 20) ein oder mehrere zusätzliche mikromechanische Federelemente (21, 22, 23) umfasst, mit welchem sie über eine seismische Masse (1) gekoppelt ist und die gesamte Feder (20), ein im Wesentlichen einstellbares, insbesondere lineares, Auslenkverhalten in Richtung der Balkenabschnitte (11) aufweist.

4. Feder nach mindestens einem der Ansprüche 1 bis 3, **dadurch gekennzeichnet, dass** die Fertigungsparameter der Feder, umfassend zumindest die räumlichen Abmessungen (d, l, w) und/oder die Materialparameter der Balkenabschnitte und des wenigstens einen Verbindungsabschnitts und insbesondere der Kopplungsbereiche und/oder der Kopplungselemente, solche Werte aufweisen, dass die Feder in Richtung ihrer Balkenabschnitte (11) ein im Wesentlichen einstellbares, insbesondere lineares, Auslenkverhalten, zumindest innerhalb eines definierten Auslenkungsintervalls, aufweist.

5. Feder nach mindestens einem der Ansprüche 1 bis 4, **dadurch gekennzeichnet, dass** die Balkenabschnitte (11) und das/die Verbindungsabschnitt/e (12) der Feder (10, 20) im unausgelenkten Zustand im Wesentlichen u-förmig, v-förmig oder s-förmig ausgebildet und angeordnet sind.

6. Feder nach mindestens einem der Ansprüche 1 bis 5, **dadurch gekennzeichnet, dass** das im Wesentlichen einstellbare, insbesondere lineare, Auslenkverhalten der Feder (10, 20) zumindest durch die Ausbildung der Balkenabschnitte (11) mit definierten Längen (l) und Breiten (w) sowie durch die Anordnung der wenigstens zwei Balkenabschnitte (11) mit einem definierten Abstand (d) zueinander bestimmt ist.

7. Feder nach mindestens einem der Ansprüche 1 bis 6, **dadurch gekennzeichnet, dass** diese im Wesentlichen aus einkristallinem Silizium besteht.

8. Feder nach Anspruch 7, **dadurch gekennzeichnet, dass** die Kristallstruktur des Materials der mikromechanischen Feder (10, 20) so ausgerichtet ist, dass die Normale der Kristallgitterebene um im Wesentlichen 45° zur Normalen des Substrats (30), aus welchem die Feder gefertigt ist, ausgerichtet ist.

9. Feder nach mindestens einem der Ansprüche 1 bis 8, **dadurch gekennzeichnet, dass** der Betrag des Nichtlinearitätskoeffizienten (ß) zweiter Ordnung ihrer Federsteifigkeit bezüglich einer Auslenkung im Wesentlichen in Richtung ihrer Balkenabschnitte (11) geringer als $2000000 \ 1/m^2$, insbesondere geringer als $300000 \ 1/m^2$, ist.

10. Feder nach mindestens einem der Ansprüche 2 bis 9, **dadurch gekennzeichnet, dass** diese wenigstens ein Kopplungselement umfassend zumindest ein zusätzliches Federelement (21, 22, 23) aufweist, dessen Federsteifigkeit sich innerhalb eines definierten Auslenkungsintervalls ändert, wobei die gesamte Feder (20) so ausgebildet ist, dass diese sich ändernde Federsteifigkeit des zumindest einen zusätzlichen Federelements (21, 22, 23) insgesamt kompensiert wird und die Federsteifigkeit der gesamten Feder (20) hinsichtlich einer Auslenkung im Wesentlichen in Richtung ihrer Balkenabschnitte (11) innerhalb des definierten Auslenkungsintervalls im Wesentlichen konstant ist.

11. Verwendung der mikromechanischen Feder (10, 20) gemäß mindestens einem der Ansprüche 1 bis 10 in einem mikromechanischen System, insbesondere in mikromechanischen Sensoren.

**Claims**

1. Micromechanical spring (10, 20) comprising at least two bar sections (11) which, in the undeflected state of the spring, are oriented substantially parallel to one another or are at an angle of less than 45° with respect to one another, and one or more connecting sections (12) which connect the bar sections (11) to one another, wherein the bar sections (11) can be displaced relative to one another in their longitudinal direction, and in that the spring (10, 20) has, in the direction of its bar sections (11), a substantially adjustable force-deflecting behavior, **characterized in that** said spring has a negative non-linearity coefficient of the second order of the spring stiffness with respect to its deflection or the deflection of at least one of its bar sections (11) in the direction of the bar sections (11).

2. Spring according to Claim 1, **characterized in that** the spring (10, 20) couples at least two micromechanical elements to one another or is coupled at least to a substrate (30), and has, for the purpose of coupling, in each case a coupling region and/or at least one coupling element (1, 21, 22, 23) which comprises, in particular, at least one additional micromechanical spring element (21, 22, 23), wherein the additional spring element (21, 22, 23) is coupled in a substantially rigid fashion to the rest of the spring.

3. Spring according to Claim 2, **characterized in that** the spring (10, 20) comprises one or more additional micromechanical spring elements (21, 22, 23) with which said spring (10, 20) is coupled via a seismic mass (1), and the entire spring (20) has a substantially adjustable, in particular linear, deflection behavior in the direction of the bar sections (11).

4. Spring according to at least one of Claims 1 to 3, **characterized in that** the fabrication parameters of the spring, comprising at least the spatial dimensions (d, 1, w) and/or the material parameters of the bar sections and of the at least one connecting section and, in particular, of the coupling regions and/or of the coupling elements, have values such that the spring has, in the direction of its bar sections (11), a substantially adjustable, in particular linear, deflection behavior, at least within a defined deflection interval.

5. Spring according to at least one of Claims 1 to 4, **characterized in that** the bar sections (11) and the connecting section or sections (12) of the spring (10, 20) is/are embodied and arranged so as to be substantially u-shaped or v-shaped or s-shaped in the undeflected state.

6. Spring according to at least one of Claims 1 to 5, **characterized in that** the substantially adjustable, in particular linear, deflection behavior of the spring (10, 20) is determined at least by the embodiment of the bar sections (11) with defined lengths (1) and widths (w) and by the arrangement of the at least two bar sections (11) at a defined distance (d) from one another.

7. Spring according to at least one of Claims 1 to 6, **characterized in that** said spring is composed essentially of monocrystalline silicon.

8. Spring according to Claim 7, **characterized in that** the crystal structure of the material of the micromechanical spring (10, 20) is oriented in such a way that the perpendicular to the plane of the crystal lattice is oriented at substantially 45° with respect to the perpendicular to the substrate (30) from which the spring is fabricated.

9. Spring according to at least one of Claims 1 to 8, **characterized in that** the absolute value of the non-linearity coefficient ($\beta$) of the second order of its spring stiffness with respect to a deflection substantially in the direction of its bar sections (11) is less than 2 000 000 $1/m^2$, in particular less than 300 000 $1/m^2$.

10. Spring according to at least one of Claims 2 to 9, **characterized in that** said spring has at least one coupling element comprising at least one additional spring element (21, 22, 23), the spring stiffness of which changes within a defined deflection interval, wherein the entire spring (20) is embodied in such a way that this changing spring stiffness of the at least one additional spring element (21, 22, 23) is compensated overall, and the spring stiffness of the entire spring (20) is substantially constant with respect to a deflection substantially in the direction of its bar sections (11) within the defined deflection interval.

11. Use of the micromechanical spring (10, 20) according to at least one of Claims 1 to 10 in a micromechanical system, in particular in micromechanical sensors.

**Revendications**

1. Ressort micromécanique (10, 20), comprenant au moins deux sections de poutre (11), qui sont orientées essentiellement parallèles l'une à l'autre dans l'état non dévié du ressort, ou présentent un angle de moins de 45° l'une par rapport à l'autre, et une ou plusieurs sections de connexion (12), qui connectent les sections de poutre (11) l'une avec l'autre, les sections de poutre (11) pouvant coulisser l'une par rapport à l'autre au regard de leur direction longitudinale, et en ce que le ressort (10, 20) présente un comportement de déviation de force essentiellement réglable dans la direction de ses sections de poutre (11), **caractérisé en ce que** celui-ci présente un coefficient de non-linéarité négatif du deuxième ordre de la dureté de ressort au regard de sa déviation ou de la déviation d'au moins une de ses sections de poutre (11) dans la direction des sections de poutre (11).

2. Ressort selon la revendication 1, **caractérisé en ce que** le ressort (10, 20) couple au moins deux éléments micromécaniques l'un avec l'autre ou est couplé à au moins un substrat (30) et présente pour le couplage respectivement une zone de couplage et/ou au moins un élément de couplage (1, 21, 22, 23), qui comprend notamment au moins un élément de ressort micromécanique supplémentaire (21, 22, 23), l'élément de ressort supplémentaire (21, 22, 23) étant couplé de manière essentiellement rigide avec le reste du ressort.

3. Ressort selon la revendication 2, **caractérisé en ce que** le ressort (10, 20) comprend un ou plusieurs éléments de ressort micromécaniques supplémentaires (21, 22, 23), avec lesquels il est couplé par l'intermédiaire d'une masse sismique (1), et le ressort entier (20) présente un comportement de déviation essentiellement réglable, notamment linéaire, dans la direction des sections de poutre (11).

4. Ressort selon au moins l'une quelconque des revendications 1 à 3, **caractérisé en ce que** les paramètres de fabrication du ressort, comprenant au moins les dimensions spatiales (d, l, w) et/ou les paramètres de matériau des sections de poutre et de l'au moins une section de connexion et notamment des zones de couplage et/ou des éléments de couplage, présentent des valeurs telles que le ressort présente dans la direction de ses sections de poutre (11) un comportement de déviation essentiellement réglable, notamment linéaire, au moins à l'intérieur d'un intervalle de déviation défini.

5. Ressort selon au moins l'une quelconque des revendications 1 à 4, **caractérisé en ce que** les sections de poutre (11) et la ou les sections de connexion (12) du ressort (10, 20) sont configurées et agencées essentiellement en forme de u, en forme de v ou en forme de s dans l'état non dévié.

6. Ressort selon au moins l'une quelconque des revendications 1 à 5, **caractérisé en ce que** le comportement de déviation essentiellement réglable, notamment linéaire, du ressort (10, 20) est déterminé au moins par la configuration des sections de poutre (11) avec des longueurs (l) et des largeurs (w) définies, ainsi que par l'agencement des au moins deux sections de poutre (11) avec un écart (d) défini l'une par rapport à l'autre.

7. Ressort selon au moins l'une quelconque des revendications 1 à 6, **caractérisé en ce que** celui-ci est essentiellement constitué par du silicium monocristallin.

8. Ressort selon la revendication 7, **caractérisé en ce que** la structure cristalline du matériau du ressort micromécanique (10, 20) est conçue de telle sorte que la normale du plan de réseau cristallin soit orientée essentiellement à 45° de la normale du substrat (30) à partir duquel le ressort est fabriqué.

9. Ressort selon au moins l'une quelconque des revendications 1 à 8, **caractérisé en ce que** le montant du coefficient de non-linéarité ($\beta$) du deuxième ordre de sa dureté de ressort au regard d'une déviation essentiellement dans la direction de ses sections de poutre (11) est inférieur à 2 000 000 $1/m^2$, notamment inférieur à 300 000 $1/m^2$.

10. Ressort selon au moins l'une quelconque des revendications 2 à 9, **caractérisé en ce que** celui-ci présente au moins un élément de couplage comprenant au moins un élément de ressort supplémentaire (21, 22, 23), dont la dureté de ressort se modifie à l'intérieur d'un intervalle de déviation défini, le ressort entier (20) étant configuré de telle sorte que celui-ci compense au total la dureté de ressort qui se modifie de l'au moins un élément de ressort supplémentaire (21, 22, 23) et la dureté de ressort du ressort entier (20) est essentiellement constante au regard d'une déviation essentiellement dans la direction de ses sections de poutre (11) à l'intérieur de l'intervalle de déviation défini.

11. Utilisation du ressort micromécanique (10, 20) selon au moins l'une quelconque des revendications 1 à 10 dans un système micromécanique, notamment dans des capteurs micromécaniques.

Fig. 1

Fig. 2

Fig. 3

Fig. 4

a)

b) Ruhelage

c)

Fig. 5

Fig. 6

Fig. 7

Fig. 8

a)

b)

20 21

20 1 22

20 1 23

c) d) e)

## Fig. 9

1

10

## Fig. 10

Fig. 11

Fig. 12

Fig. 13

Fig. 14

**IN DER BESCHREIBUNG AUFGEFÜHRTE DOKUMENTE**

**In der Beschreibung aufgeführte Patentdokumente**

- DE 19920066
- US 7086300 B1